(19) Europäisches Patentamt

European Patent Office

Office européen des brevets

(11) Veröffentlichungsnummer: **0 347 534 B1**

(12) **EUROPÄISCHE PATENTSCHRIFT**

(51) Int. Cl.⁵: **F02M 69/04, F02M 53/02, F02M 31/18, F02M 31/16**

(45) Veröffentlichungstag der Patentschrift:
**27.12.91 Patentblatt 91/52**

(21) Anmeldenummer: **89106021.2**

(22) Anmeldetag: **06.04.89**

(54) Brennstoffeinspritzsystem für Brennkraftmaschinen.

(30) Priorität: **23.06.88 DE 3821163**
**30.09.88 DE 3833215**

(43) Veröffentlichungstag der Anmeldung:
**27.12.89 Patentblatt 89/52**

(45) Bekanntmachung des Hinweises auf die
Patenterteilung:
**27.12.91 Patentblatt 91/52**

(84) Benannte Vertragsstaaten:
**DE FR GB IT**

(56) Entgegenhaltungen:
**DE-A- 3 502 767**
**FR-A- 2 116 047**
**FR-A- 2 124 954**
**Patent Abstract of Japan vol. 11, no. 28**
**(M-557)(2475) 27 Jan. 1987, & JP-A-61200369**
**(Mitsubishi) 04 Sept. 1986**
**Patent Abstracts of Japan vol. 8, no. 43 (M-279)**
**(1480) 24 Febr. 1984, & JP-A-58197462 (Mitsub-**
**ishi) 17 Nov. 1983 Patent Abstracts of Japan**
**vol. 8, no.43 (M-279)(1480) 24 Febr. 1984, &**
**JP-A- 58197463 (Mitsöubshi Denki) 17 Nov.**
**1983**

(73) Patentinhaber: **PIERBURG GMBH**
**Alfred-Pierburg-Strasse 1**
**W-4040 Neuss 1 (DE)**

(72) Erfinder: **Hofbauer, Peter, Prof. Dr.-Ing.**
**Hinsbecker Str. 13**
**W-4000 Düsseldorf 11 (DE)**
Erfinder: **Härtel, Günter, Dipl.-Ing**
**Am Vogelbusch 16**
**W-4040 Neuss 21 (DE)**
Erfinder: **Lösing, Karl Heinrich, Dr.-Ing.**
**Aueblick 8**
**W-4230 Wesel 1 (DE)**
Erfinder: **Dorner, Robert, Dr. rer. nat.**
**Mehrungerstr. 9**
**W-4000 Düsseldorf 13 (DE)**
Erfinder: **Simonis, Rainer, Dr.-Ing.**
**Artilleriestr. 39**
**W-5170 Jülich (DE)**
Erfinder: **Schulte, Erasmus, Dr.-Ing.**
**Fährstr. 166**
**W-4000 Düsseldorf (DE)**

## Beschreibung

Die Erfindung betrifft ein Brennstoffeinspritzsystem für Brennkraftmaschinen mit einer Ausmündung zur Brennstoffabgabe, wobei die abzugebende Menge in Abhängigkeit von Kenngrößen in einem Steuergerät ermittelt und als ein diese Menge charakterisierendes Signal ausgegeben wird.

Ein solches system ist z.B. in den Patent Abstracts of Japan, JP-A-58197463 beschrieben.

Derartige Einrichtungen sind bekannt und als elektronische Einspritzsysteme im Markt. Sie erfordern zur Brennstoffdosierung mechanisch sehr aufwendig zu fertigende hochpräzise Bauteile.

Die Vorteile des Systems gemäß dem Hauptanspruch bestehen darin, daß ein sequentielles und selektives Einspritzsystem mit hohem Freiheitsgrad der Mengenverteilung über den zeitlichen Verlauf möglich ist. Der Einspritzimpuls wird ohne Zwischenschaltung mechanischer oder elektromechanischer Bauteile in eine dosierte abzuspritzende Brennstoffmenge umgesetzt.

Erfingsgemäß ist bei einem Brennstoffeinspritzsystem eingangs genannter Art vorgesehen, daß mit dem eine Brennstoffmenge charakterisierenden Signal eine Emissionsquelle mit schmalem Wellenbereich, bevorzugt ein Laser, zur Auslösung mindestens eines Impulses von errechneter Dauer und/oder Intensität beaufschlagt wird, wobei dieser Impuls in ein innerhalb einer Kammer befindliches und definiertes Volumen von Brennstoff gelenkt wird und ein definiertes Teil dieses Volumens über die Ausmündung ausgepreßt wird.

Der Brennstoff wird durch Druckerhöhung bei der Bildung von Dampfblasen längerer oder kürzerer Lebensdauer, wobei diese sich als Druckwellen auswirken, ausgepreßt. Die Druckwellen können im Brennstoff auch durch Bildung von Resonanz bei entsprechender Anregung erzeugt werden. Dies ist auch bei Beaufschlagung mit Wellen im Ultraschallbereich denkbar.

Ausgestaltungen der Erfindung sind in den weiteren Ansprüchen angegeben. Nachfolgend wird die Erfindung an Ausführungsbeispielen schematisch beschrieben.

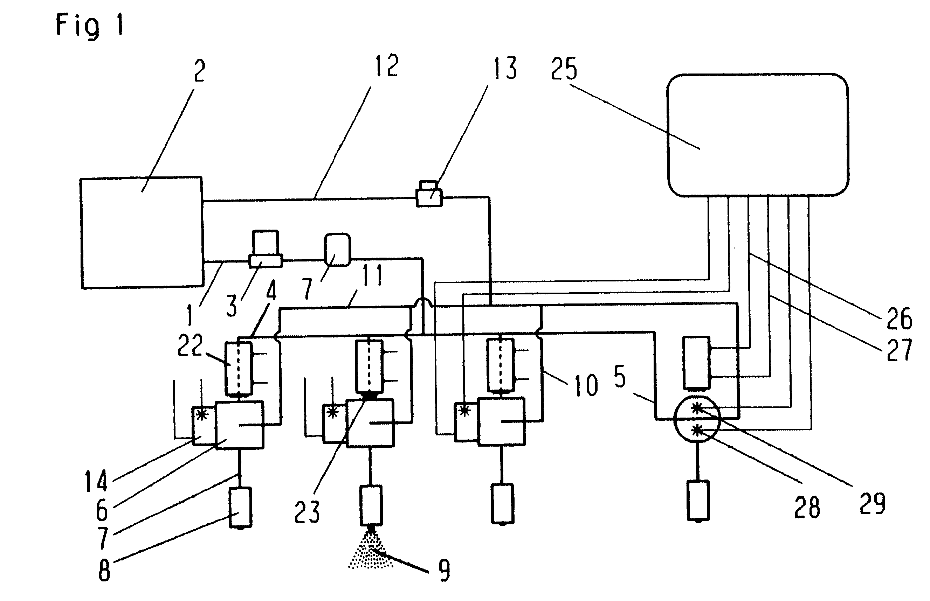

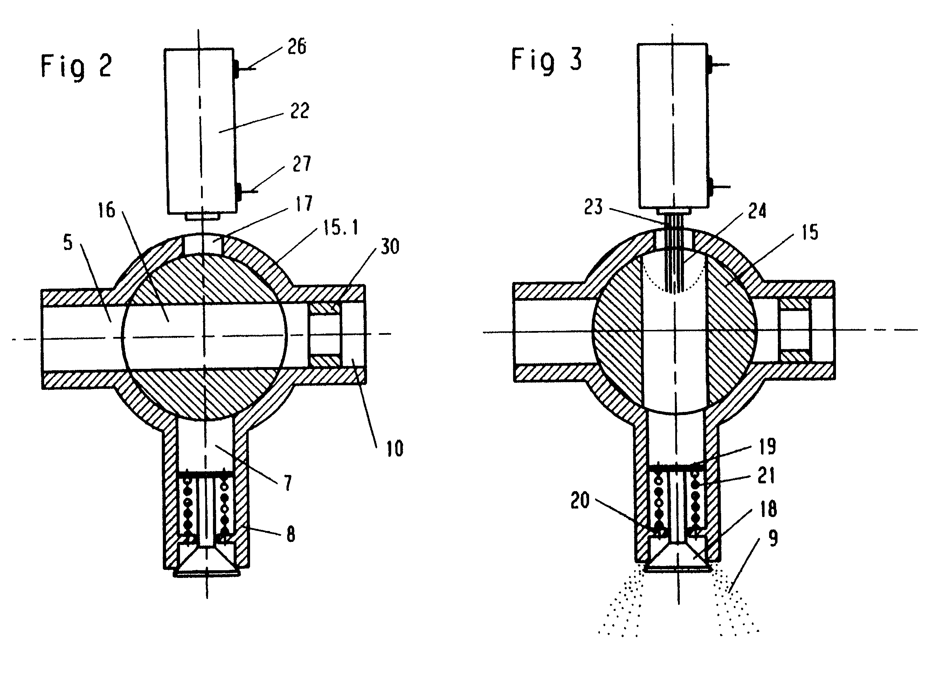

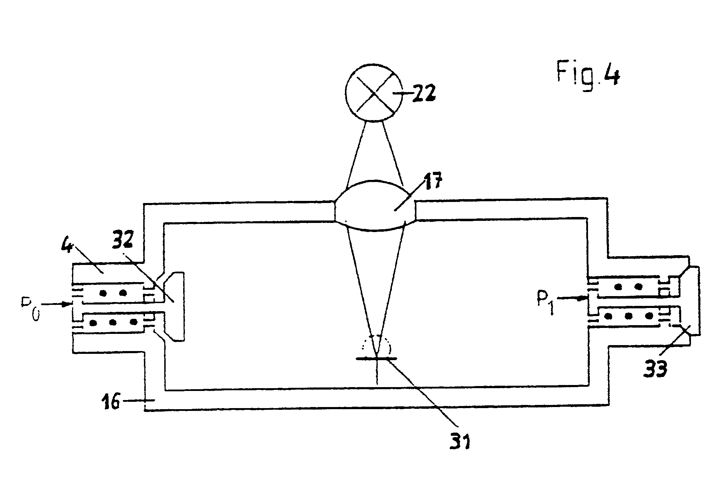

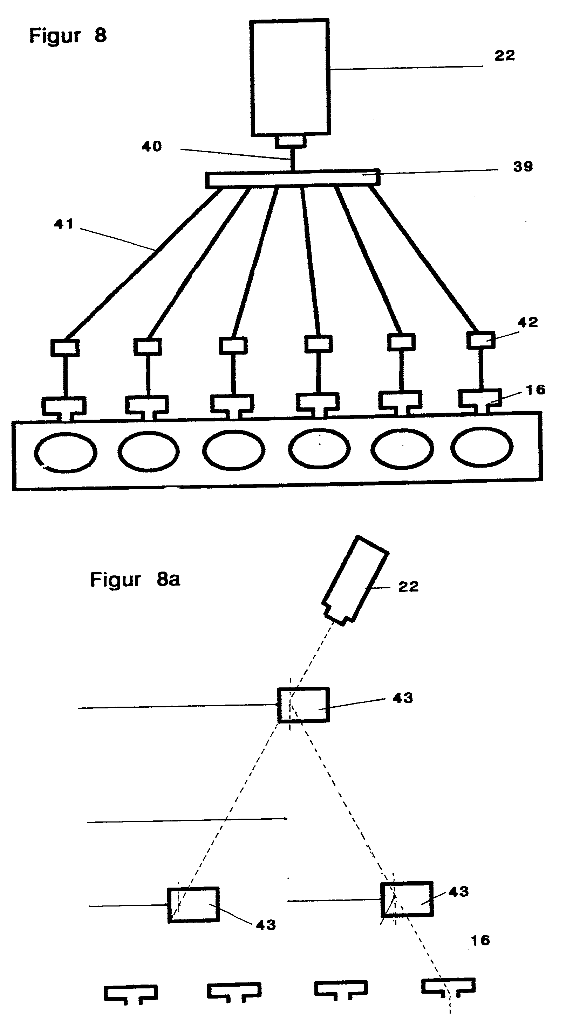

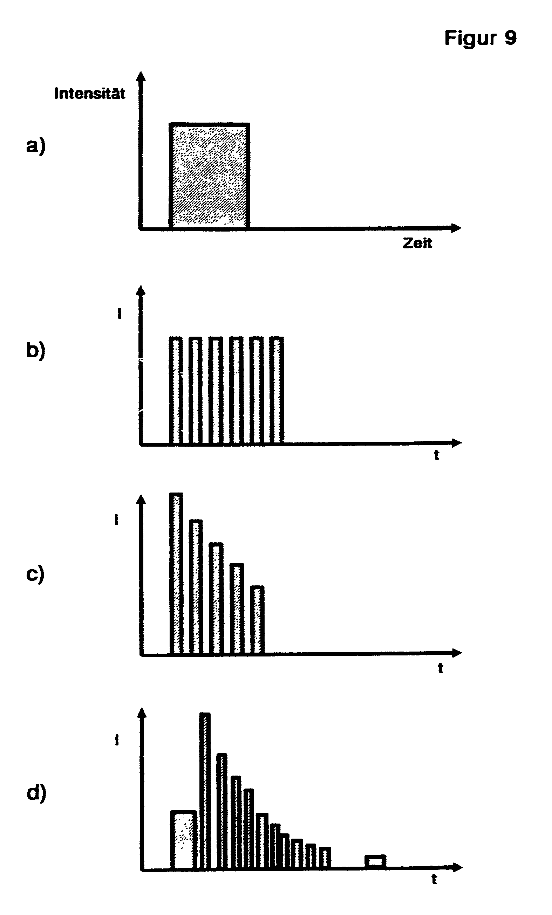

Die Fig. 1 zeigt den schematischen Aufbau des Einspritzsystems und die Fig. 2 und 3 Einzelheiten hierzu. Fig. 4 bis 7 zeigen Details anderer Ausführungsformen, die Fig. 8 zeigt eine Ausführungsform mit einem zentralen Laser und die Fig. 9 zeigt die verschiedenen Möglichkeiten von Impulsformen des Lasers.

Gemäß Fig. 1 wird der Brennstoff über die Brennstoffvorlaufleitung 1 dem Brennstofftank 2 und mittels der Brennstoffpumpe 3 über die Leitung 4 und 5 zu Drehschiebern 6 verteilt. Von diesen gelangt der Brennstoff zu den Ausmündungen 7 ins Saugrohr, wobei bei diesem Ausführungsbeispiel dort als Rückschlagventil wirkende Einspritzdüsen 8 angeordnet sind. Diese geben den Brennstoff als Einspritzstrahl 9 vor die Einlaßventile der Zylinder dem Saugrohr zu. Der im Überschuß geförderte Brennstoff gelangt von den Drehschiebern über Leitungen 10, 11, 12 und einen Brennstoffsystemdruckregler 13 in den Brennstofftank 2 zurück.

Die Drehschieber 6 sind in dem in der Schemazeichnung dargestellten Beispiel jeweils mit einem Elektromotor 14 für den Drehschieberantrieb ausgerüstet. Der Antrieb erfolgt im Arbeitstakt des Verbrennungsmotors, d.h. bei einem Viertaktmotor synchron mit der Nockenwellendrehzahl. Die Anzahl der Drehschiebereinheiten entspricht in dem Ausführungsbeispiel der Anzahl der durch das Brennstoffeinspritzsystem zu versorgenden Zylinder. Andere konstruktive Lösungen zur Verteilung der dosierten Menge sind denkbar.

Durch den Antrieb wird bei einer aus Hahn 15.1 und Küken 15 gebildeten Einrichtung dieses drehend betätigt, wodurch eine im Küken als Durchgangsbohrung gebildete Kammer 16 abwechselnd in Deckung mit den Öffnungen der Brennstoffleitungen 5 und 10 oder mit der Öffnung der Brennstoffleitung 7 und einem optischen Fenster 17 ist. Am Ende der Ausmündungen 7 ist jeweils eine Einspritzdüse 8 angeordnet, die federbelastet in Schließrichtung gehalten wird und erst bei Überschreiten eines vorgegebenen Öffnungsdruckes öffnet. In dem dargestellten Beispiel wird der Ventilschließkörper 18 durch die Kraft der zwischen den Federauflagen 19, 20 eingespannten Druckfeder 21 in Schließstellung gehalten. Bei Überschreiten des Öffnungsdruckes übersteigt die Kraft aus der Druckdifferenz zwischen dem Inneren der Ausmündungen 7 und dem Umgebungsdruck am Ventilaustritt die Kraft der Druckfeder 21, wodurch der Ventilschließkörper öffnet und Brennstoff so lange abgespritzt wird, bis zumindest wieder ein Gleichgewichtszustand der Kräfte erreicht ist.

Eine Überschreitung des Ventilöffnungsdruckes wird erfindungsgemäß durch eine dosierte Energiezuführung zum Zweck einer Druckerhöhung im Brennstoff, der sich in dem abgeschlossenen Volumen der Kammer 16 befindet, erreicht. Die Energiezuführung erfolgt über ein weitgehend trägheitsloses System mittels einer in einem schmalen Wellenlängenbereich emittierenden Lichtquelle, bevorzugt eines Lasers 22. Es ist möglich, durch Dosierung der im jeweiligen Abspritztakt zugeführten Energie eine bestimmte Menge Brennstoff zu verdampfen und eine dementsprechende proportionale Menge an flüssigem oder dampfförmigem Brennstoff abzuspritzen. Bei Impulsausgabe des Lasers 22 bildet sich aufgrund der Energiezufuhr mittels des Laserstrahls 23 durch das optische Fenster 17 in dem der Öffnung zur Einspritzleitung abgewandten Ende der Kammer 16 entweder eine Folge von Druckwellen oder eine Dampfblase 24, wodurch eine Druckerhöhung bewirkt wird und die erzeugte Druckenergie dosiert die abgespritzte Brennstoffmenge. Die Berechnung des Laserimpulses erfolgt durch ein elektronisches Steuergerät 25, das in bekannterweise Kenngrößen des Motors und der Umgebung verarbeitet. Im Speicher des Steuergerätes sind Kennfelder abgelegt, die bei unterschiedlichen Betriebsbedingungen gültige Korrelationen zwischen dem Laserimpuls und der Druckwellenerhöhung z.B. durch die Menge des verdampften Brennstoffs sowie der abzugebenden Brennstoffmenge enthalten. Durch Ausbildung als adaptives System und unter Verwendung z.B. einer Lambdasonde ist es möglich, Änderungen der Brennstoffzusammensetzung und/oder der -temperatur zu kompensieren.

Die Fig. 2 zeigt den Füllungs- und Fig. 3 den Einspritztakt. Der Laser 22 ist über Leitungen 26 und 27, der Elektromotor 14 über Leitungen 28, 29 mit dem Steuergerät verbunden. Das beschriebene System läßt sich sowohl für eine Zentraleinspritzung als auch für eine Mehrstelleneinspritzung einsetzen.

Der Fig. 2 ist zu entnehmen, daß dem optischen Fenster 17 gegenüberliegend optische Mittel 30 angeordnet sein können, die den Laserstrahl bündeln, fokussieren oder streuen. Bei entsprechender Ausbildung kann auch das optische Fenster 17 diese Aufgabe erfüllen. Die optischen Mittel 30 sind dann unmittelbar in der die Kammer 16 abschließenden Wandung gegenüber dem Laser 22 angeordnet. Denkbar ist auch, die optischen Mittel vom Kraftstoff umgeben in der Kammer 16 anzuordnen.

Ferner ist es möglich, in der Kammer 16 ein Objekt 31 an einer optisch und hydraulisch günstigen Stelle anzuordnen, auf das der Strahl 23 gerichtet ist. Mittels dieses Objektes wird die einfallende Energie mittelbar oder unmittelbar in Wärmeenergie zur Verdampfung umgesetzt. Bei der unmittelbaren Umwandlung erhitzt sich das Objekt oder eine auf ihm aufgebrachte Beschichtung. Bei der mittelbaren Umwandlung besteht das Objekt oder die aufgebrachte Beschichtung aus einem lumineszierenden Material, das das vom Laser im Wellenbereich von zum Beispiel 0,8 bis 1,6 μm emittierte Licht in ein gut vom Brennstoff zu absorbierendes Licht im Wellenlängenbereich von zum Beispiel 3,3 μm umwandelt. Eine Verwendung einer Mischform unter Ausnutzung beider Effekte ist denkbar.

Ferner ist es möglich, die der Kammer 16 zugewandte Seite der optischen Mittel so auszubilden, daß die Wellenlänge des emittierten Strahls in eine gut absorbierbare Wellenlänge umgewandelt wird. Dies kann ebenfalls durch eine lumineszierende Beschichtung bewirkt werden.

Als gut absorbierbare Wellenlänge kann eine Wellenlänge ausgesucht werden, die mit dem geringsten Energieaufwand die leichtsiedenden Bestandteile des Brennstoffs zur schlagartigen Verdampfung bringen kann.

Die Fig. 4 zeigt ein Detail einer anderen Ausführungsform des Brennstoffeinspritzsystems, wodurch der Aufwand des in Fig. 1 dargestellten System zu verringern ist. Hier is die das definierte Volumen von Brennstoff aufnehmende Kammer 16 zulauf- und austrittsseitig mit in Strömungsrichtung öffnenden Rückschlagventilen 32, 33 versehen. Die Kammer 16 ist mittels der Leitung 4 dem Druck des geförderten Brennstoffs ausgesetzt. Die Schließfeder des Ventils 33 verhindert durch ihre gegenüber der Schließfeder des Ventils 32 größeren Stärke während des Füllungsvorgangs ein Abspritzen des Brennstoffs. Das Ventil 32 schließt bei Druckgleichheit in der Kammer 16 und dem Zulauf 4. Die Druckerhöhung in der Kammer 16 durch Verdampfung einer definierten Teilmenge des eingeschlossenen Brennstoffs tritt durch die Verdrängungswirkung der gebildeten Dampfblase der abzuspritzende Brennstoff über das Ventil 33 aus. Da sich dadurch die Menge des eingeschlossenen Brennstoffs verringert, verringert sich bei Zusammenfall der Dampfblase auch der Druck in der Kammer 16, so daß das Ventil 32 unter dem in der Leitung 4 herrschenden Druck öffnet und die Kammer 16 unter vollständiger Verflüssigung der zusammenfallenden Dampfblase erneut gefüllt wird. Sofern stromab dieser Kammer bei einem Mehrdüsensystem der zugemessene Brennstoff durch eine geeignete Verteilereinrichtung jeweils den dem Saugrohr zugeordneten Ausmündungen zugeführt wird und in diesen jeweils nochmals ein Ventil 8 angeordnet ist, damit die Leitung zwischen Kammer 16 und Ausmündung stets mit Brennstoff gefüllt ist, wird lediglich ein zentral angeordneter Laser verwendet.

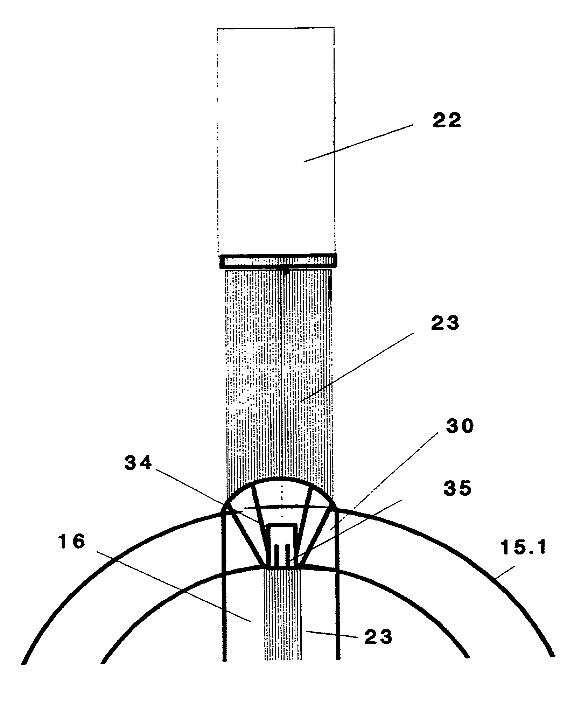

Die Fig. 5 zeigt weitere Ausführungsform. Hier ist in der Wandung des Hahns 15 ein optisches Mittel 30 zur Fokussierung des Laserstrahls 23 angeordnet. In diesem befindet sich eine Kaverne 34, die hier als Sacklochbohrung ausgeführt ist und dem Zweck dient, stets durch Verbleib eines Dampfblasenrestes in ihr als Blasenkeimstelle bei der Entstehung einer Dampfblase zu wirken. Dadurch wird erreicht, daß die zur Bildung der Dampfblase 24 erforderliche Energie geringer ist, als dies der Fall ist, wenn eine Dampfblase in reiner Flüssigkeit erzeugt werden muß. Die Aufrechterhaltung eines Dampfblasenrestes kann zusätzlich durch Zuführung externer Energie zum Beispiel mittels eines in dieser Kaverne 34 befindlichen elektrischen Heizelementes 35 sichergestellt werden. Dieses Heizelement kann beispielsweise als PTC-Stab oder -Röhren ausgebildet sein.

Bei der Ausführung nach Fig, 2, 3 und 4 ist es denkbar, die Kaverne 35 entweder in dem Objekt 31 anzubringen oder beispielsweise bei einem schräg einfallenden Laserstrahl in der Wandung der Kammer 16.

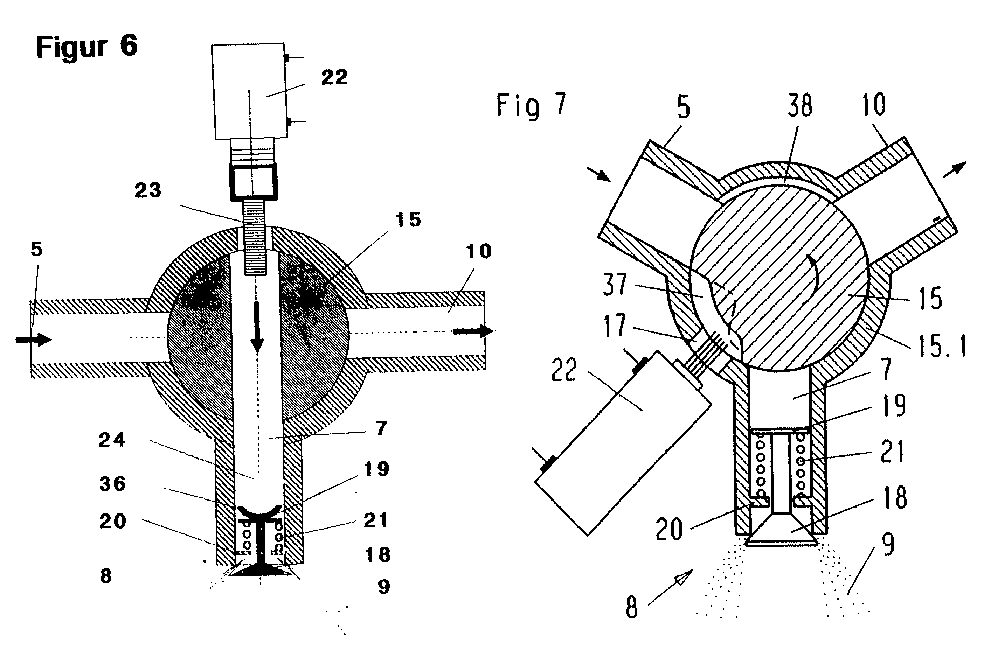

Die Fig. 6 zeigt eine Ausführungsform, bei der der Strahl 23 an einem z.B. oberhalb des Federtellers 19 angeordneten Objekt 36 in eine gut vom Brennstoff absorbierbare Lichtwelle umgewandelt und reflektiert wird, wodurch die Dampfblase in der Nähe des Auslaßes gebildet wird, so daß durch diesen ein wesentlich mit dampfförmigen Bestandteilen angereicherter Brennstoff austritt. Eine seitliche Einstrahlung durch entsprechende Anordnung des Lasers ist ebenso möglich.

Fig. 7 zeigt eine weitere Ausführung, bei der auf der Außenfläche des Kükens 15 des Drehverteilers eine Ausnehmung 37 zur Aufnahme von Brennstoff angeordnet ist, die von sich in Drehrichtung verringernder Tiefe sein kann, wie gestrichelt angedeutet ist.

Diese wird für jeden Brennstoffabgabevorgang erneut mit Brennstoff gefüllt. Die Ausnehmung 37 überstreicht bei ihrer Drehung die zu dem Ventil 8 führende Ausmündung 7 im Hahn 15.1. Der Laser 22 ist so angeordnet, daß er direkt oder indirekt in den Bereich der Ausnehmung einstrahlt, der sich entgegen der Drehrichtung (Pfeil) kurz vor der Ausmündung befindet. Dies ist bei der Ausnehmung mit sich ändernder Tiefe stets zuerst der flachere Bereich. Es bildet sich bei Beaufschlagung mit der Strahlung der abzugebende Brennstoffdampf, so daß insbesondere bei der Ausnehmung nicht konstanter Tiefe sichergestellt ist, daß zuerst Dampf und dies möglichst lange austritt.

Zum Spülen ist in der Innenwandung des Hahns 15.1 eine die Einlaßleitung 5 und die Auslaßleitung 10 verbindende Nut 38 vorgesehen, durch die ständig Brennstoff strömt. Wenn die Ausnehmung 37 diesen Bereich der Nut 38 überstreicht, werden eventuell verbleibende Dampfblasen ausgespült.

Die Fig. 8 zeigt eine Ausführung mit einer zentralen Anordnung eines Lasers 22, wo im Strahlengang dem Laser nachgeordnet eine optische oder mechanische Steuereinheit 39 vorgesehen ist, die mittels Lichtwellenleitern 40, 41 jeweils den Laser mit einer dem in Zündfolge im Ansaugtakt befindlichen Zylinder zugeordneten Kammer 16 verbindet. In dieser findet dann die Dampfblasenbildung statt. Bei dieser Einrichtung und unmittelbaren Zuordnung der Kammern 16 zum Saugrohr kann der austretende Brennstoff sich in dampfförmigem und/oder flüssigem Zustand befinden. Die Steuereinheit 39 kann so ausgebildet sein, daß der eingangsseitige Lichtwellenleiter 40 durch ein nicht dargestelltes bewegliches Prisma abwechselnd mit den ausgangsseitigen Lichtwellenleitern 41 in optischer Verbindung gebracht wird. Ferner ist eine Einrichtung denkbar, bei der der eingangsseitige Lichtwellenleiter durch Verschwenken mit den ausgangsseitigen Lichtwellenleitern nacheinander in Verbindung gebracht wird. Die Steuereinheit 39 kann auch so ausgebildet sein, daß das eingehende Licht auf die ausgehenden Lichtwellenleiter 41 gleichmäßig aufgeteilt wird und durch eine mechanische Vorrichtung, zum Beispiel eine Lochblende sichergestellt wird, daß nur Licht zu der Kammer gelangt, deren Zylinder sich im Ansaugtakt befindet. Eine andere Möglichkeit besteht darin, daß der Laser 22 auf den Lichtwellenleiter mittels einer Schwenkeinrichtung positioniert wird, der mit der Kammer 16 in Verbindung steht, die dem im Ansaugtakt befindlichen Zylinder zugeordnet ist. Zur Freigabe des Durchgangs der Lichtwellenleiter kann in diesem jeweils ein opto-elektrischer Schalter 42 angeordnet sein, der bei Spannungsbeaufschlagung den optischen Durchgang freigibt.

Die Fig. 8a zeigt Ausführung, bei der die Umlenkeinrichtung als akustisch optischer Wandler 43 ausgebildet ist, die in zwei Ebenen hintereinander angeordnet sind. Ein derartiger Wandler reflektiert an einer Trennebene bei Anlegen einer Spannung den einfallenden Strahl. Ohne Anlage von Spannung ist diese Trennebene durchlässig. Auf diese Weise läßt sich ein Strahl in zeitlicher Reihenfolge auf vier Kammern 16 lenken. Es ist auch eine Ausführung möglich, die eine Laserdiodenzeile vorsieht, das sind mehrere miteinander zu einem Bauteil verbundene Laserdioden, die unabhängig voneinander wirken. Die Einzeldioden sind über Lichtwellenleiter jeweils mit der Kammer 16 verbunden und werden in Zündfolge erregt.

Die Fig. 9a-d zeigt verschiedene Möglichkeiten der Ausbildung des Laserimpulses zur Bildung einer Dampfblase. Die Fig. a zeigt einen Impuls, der bei konstanter Intensität über eine bestimmte Zeit abgegeben wird. Die Fig. b zeigt zur Bildung einer Dampfblase Impulse konstanter Intensität und gleicher Impulszeit, jedoch mehrfach auftretend. Die Fig. c zeigt zur Bildung einer Dampfblase mehrere Impulse gleicher Impulsdauer, jedoch geänderter Intensität, während die Fig. d Impulse variabler Dauer und variabler Intensität zeigt.

Unter Dauer eines Impulses wird hier die zeitliche Länge des emittierten Laserstrahls unter Intensität der Energieinhalt des Laserstrahls durch Variation des Erregerstroms verstanden. Mittels der in Fig. 5 dargestellten Einrichtung wird durch die optischen Mittel 30 die Energiedichte des Lasers pro Flächeneinheit bestimmt. Die angegebene Variation des Laserimpulses, die von dem Steuergerät 25 festgelegt wird, wird zweckmäßigerweise dazu benutzt, durch entsprechende Aufteilung des errechneten Erregerimpulses die Bildung der Dampfblase mit geringstmöglichem Energieaufwand zu bewirken, da es sich gezeigt hat, daß die Dampfblasenbildung leichter erfolgt, wenn mehrere Impulse mit zeitlichem Abstand emittiert werden als dies mit einem längeren Dauerimpuls möglich ist.

**Patentansprüche**

1. Brennstoffeinspritzsystem für Brennkraftmaschinen mit einer Ausmündung zur Brennstoffabgabe, wobei die abzugebende Menge in Abhängigkeit von Kenngrößen in einem Steuergerät ermittelt und als ein diese Menge charakterisierendes Signal ausgegeben wird, dadurch gekennzeichnet, daß mit diesem Signal ein Laser (22), zur Auslösung mindestens eines Impulses von errechneter Dauer und/oder Intensität beaufschlagt wird, wobei dieser Impuls in ein innerhalb einer Kammer (16) befindliches und definiertes Volumen von Brennstoff gelenkt wird und ein definiertes Teil (24) dieses Volumens über die Ausmündung ausgepreßt wird.

2. Brennstoffeinspritzsystem nach Anspruch 1, dadurch gekennzeichnet, daß in dem Steuergerät (25) bei unterschiedlichen Betriebsbedingungen gültige Korrelationen zwischen dem Laserimpuls und der Druckerhöhung sowie der abzugebenden Brennstoffmenge abgelegt sind.

3. Brennstoffeinspritzsystem nach Anspruch 2, dadurch gekennzeichnet, daß zur Kompensation von Änderungen der Brennstoffzusammensetzung und-/oder der Brennstofftemperatur die Korrelationen in adaptiven Kennfeldern im Steuergerät (25) abgelegt sind.

4. Brennstoffeinspritzsystem nach mindestens einem der vorstehenden Ansprüche, dadurch gekennzeichnet, daß das eine Brennstoffmenge charakterisierende Signal mehrere Impulse gleicher oder ungleicher Dauer und/oder gleicher oder ungleicher Intensität auslöst.

5. Brennstoffeinspritzsystem nach mindestens einem der vorstehenden Ansprüche, dadurch gekennzeichnet, daß der Laserstrahl (23) durch optische Mittel (30) gebündelt oder gestreut oder fokussiert wird.

6. Brennstoffeinspritzsystem nach Anspruch 5, dadurch gekennzeichnet, daß die optischen Mittel (30) in der die Kammer (16) abschließende Wandung gegenüber dem Laser (22) angeordnet sind.

7. Brennstoffeinspritzsystem nach Anspruch 5, dadurch gekennzeichnet, daß die optischen Mittel (30) vom Brennstoff umgeben in der Kammer (16) angeordnet sind.

8. Brennstoffeinspritzsystem nach mindestens einem der vorstehenden Ansprüche, dadurch gekennzeichnet, daß der Strahl (23) auf ein in der Kammer (16) befindliches Objekt (31) gelenkt wird.

9. Brennstoffeinspritzsystem nach Anspruch 8, dadurch gekennzeichnet, daß an dem Objekt (31) die Umwandlung der einfallenden Energie mittelbar und-/oder unmittelbar in Wärmeenergie erfolgt.

10. Brennstoffeinspritzsystem nach Anspruch 8, dadurch gekennzeichnet, daß das Objekt (31) die Wellenlänge der einfallenden Strahlung in eine vom Brennstoff absorbierbare Wellenlänge umwandelt.

11. Brennstoffeinspritzsystem nach Anspruch 8, dadurch gekennzeichnet, daß das Objekt (31) die einfallende Strahlung unmittelbar in Verdampfungswärme umwandelt.

12. Brennstoffeinspritzsystem nach Anspruch 10 oder 11, dadurch gekennzeichnet, daß das Objekt (31) eine die Umwandlung fördernde bzw. bewirkende Beschichtung aufweist.

13. Brennstoffeinspritzsystem nach Anspruch 8, dadurch gekennzeichnet, daß das Objekt (31) aus einem lumineszierenden Material besteht.

14. Brennstoffeinspritzsystem nach Anspruch 5, dadurch gekennzeichnet, daß die der Kammer (16) zugewandte Seite der optischen Mittel (30) so ausgebildet ist, daß die Wellenlänge des emittierten Strahls (23) in eine gut vom Brennstoff absorbierbare Wellenlänge umgewandelt wird.

15. Brennstoffeinspritzsystem nach mindestens einem der vorstehenden Ansprüche, dadurch gekennzeichnet, daß die Wellenlänge des emittierten Strahls (23) ganz oder teilweise in eine gut vom Brennstoff absorbierbare Wellenlänge mittels einer lumineszierenden Schicht umgewandelt wird.

16. Brennstoffeinspritzsystem nach mindestens einem der vorstehenden Ansprüche, dadurch gekennzeichnet, daß die emittierten oder die umgewandelten Wellen von einer Wellenlänge sind, die von den leichtsiedenden Bestandteilen des Brennstoffs vorzugsweise absorbiert werden.

17. Brennstoffeinspritzsystem nach mindestens einem der vorstehenden Ansprüche, dadurch gekennzeichnet, daß im Strahl (23) in der Kammer (16) eine Blasenkeimstelle von definierter Größe in Form einer Kaverne (34) oder eines engen Kanals angeordnet ist, in dem stets ein Dampfrest verbleibt.

18. Brennstoffeinspritzsystem nach Anspruch 17, dadurch gekennzeichnet, daß die Kaverne (34) durch externe Energiezuführung mittels eines Heizelementes (35) frei von flüssigem Brennstoff gehalten wird.

19. Brennstoffeinspritzsystem nach mindestens einem der vorstehenden Ansprüche, dadurch gekennzeichnet, daß der über die Ausmündung abzugebende Brennstoff sich in dampfförmigem und/oder flüssigem Zustand befindet.

20. Brennstoffeinspritzsystem nach mindestens einem der vorstehenden Ansprüche, dadurch gekennzeichnet, daß die Kammer (16) in einem drehbar in einem Hahn (15.1) befindlichen Küken (15) angeordnet ist, wobei dieses abwechselnd zwei Stellungen einnimmt, deren erste die Kammer (16) mit dem Brennstoffzulauf (5) und dem Brennstoffrücklauf (10) verbindet und deren zweite die Kammer (16) in eine Position bringt, in der sie einerseits über eine Brennstoffverteilerleitung (7) mit einer Einspritzdüse (8) und andererseits mit einem im Gehäuse des Hahns (15.1) angeordneten optischen Fenster (17) fluchtet.

21. Brennstoffeinspritzsystem nach Anspruch 20, dadurch gekennzeichnet, daß in dem Brennstoffrücklauf unmittelbar stromab des Hahns (15.1) eine Drossel angeordnet ist.

22. Brennstoffeinspritzsystem nach Anspruch 20, dadurch gekennzeichnet, daß das Küken (15) mittels eines von dem Steuergerät (25) angesteuerten Stellgliedes (14) positioniert wird.

23. Brennstoffeinspritzsystem nach einem der vorstehenden Ansprüche, dadurch gekennzeichnet, daß der Strahl (23) in eine Kammer (16) gerichtet ist, die zulauf- und austrittsseitig jeweils ein in Strömungsrichtung öffnendes Rückschlagventil (32, 33) aufweist.

24. Brennstoffeinspritzsystem nach einem der vorstehenden Ansprüche, dadurch gekennzeichnet, daß im Bereich der Ausmündung (7) ein reflektierendes Objekt (36) angeordnet ist, von dem aus Strahlung einer absorbierbaren Wellenlänge den Druck im Brennstoff nahe des Ventils (8) erhöht.

25. Brennstoffeinspritzsystem nach einem der vorstehenden Ansprüche, dadurch gekennzeichnet, daß auf der Außenfläche des Kükens (15) des Drehverteilers zur Brennstoffaufnahme eine Ausnehmung (37) angeordnet ist, die durch Drehung mit der Ausmündung (7) in Verbindung kommt und das optische Fenster (17) derart angeordnet ist, daß es von der Ausnehmung (37) überstrichen wird, bevor diese in Verbindung mit der Ausmündung (7) tritt.

26. Brennstoffeinspritzsystem nach Anspruch 25, dadurch gekennzeichnet, daß eine in der Innenfläche des Hahns (15.1) angeordnete Nut (38) Einlaß (5) und Auslaß (10) miteinander verbindet.

27. Brennstoffeinspritzsystem nach mindestens einem der vorstehenden Ansprüche, dadurch gekennzeichnet, daß ausgehend von einem zentral angeordneten Laser (22) mittels Lichtwellenleitern (40, 41) die Strahlung Kammern (16) zugeführt wird, die entsprechend der Zylinderzahl vorhanden und stromauf des jeweiligen Einlaßventils ins Saugrohr ausmündend angeordnet sind.

28. Brennstoffeinspritzsystem nach Anspruch 27, dadurch gekennzeichnet, daß mittels einer Steuereinheit (39) der Strahlungsdurchgang zur Kammer (16) desjenigen Zylinders freigegeben wird, der sich in Zündfolge im Ansaugtakt befindet.

29. Brennstoffeinspritzsystem nach Anspruch 27, dadurch gekennzeichnet, daß dem Laser (22) eine mechanisch und/oder optisch arbeitende Umlenkeinrichtung nachgeschaltet ist, die die Strahlung zur Kammer (16) desjenigen Zylinders lenkt, der sich in Zündfolge im Ansaugtakt befindet.

30. Brennstoffeinspritzsystem nach Anspruch 29, dadurch gekennzeichnet, daß die Umlenkeinrichtung ein akusto-optischer Wandler (43) ist.

31. Brennstoffeinspritzsystem nach Anspruch 30, dadurch gekennzeichnet, daß akusto-optische Wandler (43) in Reihe in zwei Ebenen angeordnet sind.

32. Brennstoffeinspritzsystem nach Anspruch 27, dadurch gekennzeichnet, daß der Laser (22) auf den Lichtwellenleiter mittels einer Schwenkeinrichtung positioniert wird, der mit der Kammer (16) in Verbindung steht, die dem im Ansaugtakt befindlichen Zylinder zugeordnet ist.

33. Brennstoffeinspritzsystem nach Anspruch 28, dadurch gekennzeichnet, daß die Freigabe mittels opto-elektrischer Schalter (42) erfolgt, die bei Spannungsbeaufschlagung einen optischen Durchgang freigeben.

34. Brennstoffeinspritzsystem nach Anspruch 27, dadurch gekennzeichnet, daß der Laser (22) aus einer Laserdiodenzeile besteht, deren Einzeldioden mit den Kammern (16) mittels Lichtwellenleitern in Verbindung stehen und die Erregung in Zündfolge derart erfolgt, daß die der im Ansaugtakt befindliche Zylinder zugeordnete Kammer (16) mit dem Strahl (23) beaufschlagt ist.

## Claims

1. Fuel-injection system for internal-combustion engines having an orifice for fuel discharge, the quantity to be discharged being calculated as a function of parameters in a control device and being output as a signal characterising said quantity, characterised in that this signal is applied to a laser (22) for triggering at least one pulse having a calculated duration and/or intensity, this pulse being directed into a defined volume of fuel situated in a chamber (16) and a defined portion (24) of this volume being forced out via the orifice.

2. Fuel-injection system according to Claim 1, characterised in that valid correlations for different operating conditions between the laser pulse and the increase in pressure are stored in the control device (25) as well the quantity of fuel to be discharged.

3. Fuel-injection system according to Claim 2, characterised in that the correlations are stored in adaptive characteristic fields in the control device (25) to compensate for changes in the fuel composition and/or the fuel temperature.

4. Fuel-injection system according to at least one of the preceding claims, characterised in that the signal characterising a fuel quantity triggers a plurality of pulses of equal or unequal duration and/or equal or unequal intensity.

5. Fuel-injection system according to at least one of the preceding claims, characterised in that the laser beam (23) is bundled or scattered or focused by optical means (30).

6. Fuel-injection system according to Claim 5, characterised in that the optical means (30) are arranged in the wall closing off the chamber (16) opposite the laser (22).

7. Fuel-injection system according to Claim 5, characterised in that the optical means (30) are arranged in the chamber (16) surrounded by the fuel.

8. Fuel-injection system according to at least one of the preceding claims, characterised in that the beam (23) is directed onto an object (31) located in the chamber (16).

9. Fuel-injection system according to Claim 8, characterised in that the incident energy is converted directly and/or indirectly into heat energy at the object (31).

10. Fuel-injection system according to Claim 8, characterised in that the object (31) converts the wavelength of the incident radiation into a wavelength that can be absorbed by the fuel.

11. Fuel-injection system according to Claim 8, characterised in that the object (31) converts the incident radiation directly into vaporisation heat.

12. Fuel-injection system according to Claim 10 or 11, characterised in that the object (31) has a coating which promotes or effects the conversion.

13. Fuel-injection system according to Claim 8, characterised in that the object (31) is made of a luminescent material.

14. Fuel-injection system according to Claim 5, characterised in that the side of the optical means (30) facing the chamber (16) is designed in such a way that the wavelength of the emitted beam (23) is converted into a wavelength that can be readily absorbed by the fuel.

15. Fuel-injection system according to at least one of the preceding claims, characterised in that the wavelength of the emitted beam (23) is converted by means of a luminescent layer entirely or partly into a wavelength that can be readily absorbed by the fuel.

16. Fuel-injection system according to at least one of the preceding claims, characterised in that the emitted or the converted waves have a wavelength that is preferably absorbed by the low-boiling components of the fuel.

17. Fuel-injection system according to at least one of the preceding claims, characterised in that there is arranged in the beam (23) in the chamber (16) a bubble forming point of defined size in the form of a cavern (34) or of a narrow channel, in which residual vapour always remains.

18. Fuel-injection system according to Claim 17, characterised in that the cavern (34) is kept free of liquid fuel by external energy supply by means of a heating element (35).

19. Fuel-injection system according to at least one of the preceding claims, characterised in that the fuel to be discharged via the orifice is in a vapour and/or liquid state.

20. Fuel-injection system according to at least one of the preceding claims, characterised in that the chamber (16) is arranged in a plug (15) rotatably located in a cock (15.1), said plug alternately assuming two positions, the first of which connects the chamber (16) to the fuel inlet (5) and to the fuel return line (10), and the second of which brings the chamber (16) into a position in which it is flush on the one hand with an injection nozzle (8) via a fuel distribution line (7) and on the other hand with an optical window (17) arranged in the housing of the cock (15.1).

21. Fuel-injection system according to Claim 20, characterised in that a choke is arranged in the fuel return line directly downstream of the cock (15.1).

22. Fuel-injection system according to Claim 20, characterised in that the plug (15) is positioned by means of an actuator (14) driven by the control device (25).

23. Fuel-injection system according to one of the preceding claims, characterised in that the beam (23) is directed into a chamber (16) which has in each case a non-return valve (32,33) opening in flow direction on the inlet side and outlet side.

24. Fuel-injection system according to one of the preceding claims, characterised in that there is arranged in the region of the orifice (7) a reflecting object (36), from where radiation of a wavelength that can be absorbed increases the pressure in the fuel in the vicinity of the valve (8).

25. Fuel-injection system according to one of the preceding claims, characterised in that a cutout (37) for receiving fuel is arranged on the outer face of the plug (15) of the rotary valve, which cutout (37) comes into contact with the cutout (7) as a result of rotation, and the optical window (17) is arranged in such a way that it is passed over by the cutout (37) before the latter comes into contact with the cutout (7).

26. Fuel-injection system according to Claim 25, characterised in that a groove (38) arranged in the inner face of the cock (15.1) connects inlet (5) and outlet (10) to one another.

27. Fuel-injection system according to at least one of the preceding claims, characterised in that, starting from a centrally arranged laser (22), the radiation is supplied by means of optical fibres (40, 41) to chambers (16), which are arranged so as to emerge into the intake pipe upstream of the respective inlet valve, and the number of which corresponds to the number of cylinders.

28. Fuel-injection system according to Claim 27, characterised in that, by means of a control unit (39), the radiation passage to the chamber (16) of the cylinder which is currently in the induction stroke in the timing sequence is released.

29. Fuel-injection system according to Claim 27, characterised in that connected downstream of the laser (22) is a mechanically and/or optically functioning deflection device which directs the radiation to the chamber (16) of the cylinder which is currently in the induction stroke in the timing sequence.

30. Fuel-injection system according to Claim 29, characterised in that the deflection device is an acousto-optical transducer (43).

31. Fuel-injection system according to Claim 30, characterised in that acousto-optical transducers (43) are connected in series on two planes.

32. Fuel-injection system according to Claim 27, characterised in that the laser (22) is positioned onto the optical fibres by means of a swivelling device which is connected to the chamber (16) associated with the cylinder currently in the induction stroke.

33. Fuel-injection system according to Claim 28, characterised in that the release is effected by means of opto-electrical switches (42) which release an optical passage when a voltage is applied.

34. Fuel-injection system according to Claim 27, characterised in that the laser (22) consists of a laser diode array, the individual diodes of which are connected to the chambers (16) by means of the optical fibres, and the excitation is effected in the timing sequence in such a way that the chamber (16) associated with the cylinder currently in the induction stroke receives the beam (23).

## Revendications

1. Système d'injection de carburant pour moteurs à combustion interne, comprenant une sortie pour la distribution de carburant, la quantité à distribuer étant déterminée en fonction de paramètres dans un appareil de commande et sortie en tant que signal caractérisant cette quantité, caractérisé en ce que ce signal est transmis à un laser (22) pour le déclenchement d'au moins une impulsion d'une durée et/ou d'une intensité calculée, ladite impulsion étant envoyée dans un volume de carburant défini contenu dans une chambre (16) et une partie définie (24) de ce volume étant expulsée par l'intermédiaire de la sortie.

2. Système d'injection de carburant selon la revendication 1, caractérisé en ce que dans l'appareil de commande (25) sont stockées des corrélations entre l'impulsion laser et l'augmentation de la pression ainsi que la quantité de carburant à distribuer valables pour différentes conditions de fonctionnement.

3. Système d'injection de carburant selon la revendication 2, caractérisé en ce que, pour la compensation de changements de la composition du carburant et/ou de la température du carburant, les corrélations sont stockées dans des diagrammes caractéristiques adaptatifs dans l'appareil de commande (25).

4. Système d'injection de carburant selon au moins l'une des revendications précédentes, caractérisé en ce que le signal caractérisant une quantité de carburant déclenche des impulsions d'une durée égale ou inégale et/ou d'une intensité égale ou inégale.

5. Système d'injection de carburant selon au moins l'une des revendications précédentes, caractérisé en ce que le faisceau laser (23) est concentré ou dispersé ou focalisé par des moyens optiques (30).

6. Système d'injection de carburant selon la revendication 5, caractérisé en ce que les moyens optiques (30) sont disposés dans la paroi délimitant la chambre (16), en face du laser (22).

7. Système d'injection de carburant selon la revendication 5, caractérisé en ce que les moyens optiques (30) sont entourés de carburant à l'intérieur de la chambre (16).

8. Système d'injection de carburant selon au moins l'une des revendications précédentes, caractérisé en ce que le faisceau (23) est dirigé vers un objet (31) placé dans la chambre (16).

9. Système d'injection de carburant selon la revendication 8, caractérisé en ce que sur l'objet (31) l'énergie incidente est transformée indirectement et/ou directement en énergie thermique.

10. Système d'injection de carburant selon la revendication 8, caractérisé en ce que l'objet (31) transforme la longueur d'onde du rayonnement incident en une longueur d'onde pouvant être absorbée par le carburant.

11. Système d'injection de carburant selon la revendication 8, caractérisé en ce que l'objet (31) transforme l'énergie incidente directement en chaleur d'évaporation.

12. Système d'injection de carburant selon l'une des revendications 10 ou 11, caractérisé en ce que l'objet (31) présente un revêtement favorisant et respectivement provoquant la transformation.

13. Système d'injection de carburant selon la revendication 8, caractérisé en ce que l'objet (31) est constitué d'un matériau luminescent.

14. Système d'injection de carburant selon la revendication 5, caractérisé en ce que le côté des moyens optiques (30) dirigé vers la chambre (16) est conforme de manière que la longueur d'onde du faisceau émis (23) est transformée en une longueur d'onde facilement absorbable par le carburant.

15. Système d'injection de carburant selon au moins l'une des revendications précédentes, caractérisé en ce que, au moyen d'une couche luminescente, la longueur d'onde du faisceau émis (23) est transformée entièrement ou partiellement en une longueur d'onde facilement absorbable par le carburant.

16. Système d'injection de carburant selon au moins l'une des revendications précédentes, caractérisé en ce que les ondes émises ou transformées présentent une longueur d'onde qui est absorbée de préférence par les constituants à bas point d'ébullition du carburant.

17. Système d'injection de carburant selon au moins l'une des revendications précédentes, caractérisé en ce que dans le faisceau (23) dans la chambre (16) est disposé un point de germination de bulles de dimensions définies sous la forme d'une caverne (34) ou d'un canal étroit dans lequel subsiste toujours un reste de vapeur.

18. Système d'injection de carburant selon la revendication 17, caractérisé en ce que, grâce à l'amenée d'énergie extérieure au moyen d'un élément de chauffage (35), la caverne (34) est maintenue à l'abri de carburant liquide.

19. Système d'injection de carburant selon au moins l'une des revendications précédentes, caractérisé en ce que le carburant à distribuer par la sortie se trouve à l'état de vapeur et/ou de liquide.

20. Système d'injection de carburant selon au moins l'une des revendications précédentes, caractérisé en ce que la chambre (16) est disposée dans un boisseau (15) placé de manière tournante dans un robinet (15.1), ledit boisseau prenant alternativement deux positions dont la première met la chambre (16) en communication avec l'arrivée de carburant (5) et le retour du carburant (10) et dont la seconde amène la chambre (16) dans une position dans laquelle elle est alignée d'une part, par l'intermédiaire d'une conduite de distribution de carburant (7), avec un injecteur (8) et, d'autre part, avec une fenêtre optique (17) disposée dans le corps du robinet (15.1).

21. Système d'injection de carburant selon la revendication 20, caractérisé en ce que dans le retour du carburant est disposé un étranglement immédiatement en aval du robinet (15.1).

22. Système d'injection de carburant selon la revendication 20, caractérisé en ce que le boisseau (15) est positionné au moyen d'un organe de réglage (14) commandé par l'appareil de commande (25).

23. Système d'injection de carburant selon l'une des revendications précédentes, caractérisé en ce que le faisceau (23) est dirigé dans une chambre (16) qui comprend respectivement du côté arrivée et du côté sortie un clapet anti-retour (32, 33) s'ouvrant dans la direction d'écoulement.

24. Système d'injection de carburant selon l'une des revendications précédentes, caractérisé en ce que dans la région de la sortie (7) est disposé un objet réfléchissant (36) à partir duquel un rayonnement d'une longueur absorbable augmente la pression dans le carburant à proximité de la soupape (8).

25. Système d'injection de carburant selon l'une des revendications précédentes, caractérisé en ce que sur la surface extérieure du boisseau (15) du distributeur tournant est ménagé pour la réception de carburant un évidement (37) qui est amené par rotation en communication avec la sortie (7) et que la fenêtre optique (17) est disposée de telle façon qu'elle est balayée par l'évidement (37) avant que celui-ci entre en communication avec la sortie (7).

26. Système d'injection de carburant selon la revendication 25, caractérisé en ce qu'une rainure (38) ménagée dans la surface interne du robinet (15.1) relie entre elles l'entrée (5) et la sortie (10).

27. Système d'injection de carburant selon au moins l'une des revendications précédentes, caractérisé en ce que, en partant d'un laser (22) en position centrale, le rayonnement est envoyé, au moyen de guides d'ondes lumineuses (40, 41), vers des chambres (16) dont le nombre correspond à celui des cylindres et qui sont disposées de manière à déboucher dans le tuyau d'aspiration en amont de la soupape d'admission respective.

28. Système d'injection de carburant selon la revendication 27, caractérisé en ce qu'une unité de commande (39) libère le passage du rayonnement vers la chambre (16) du cylindre qui, dans l'ordre d'allumage, se trouve en course d'aspiration.

29. Système d'injection de carburant selon la revendication 27, caractérisé en ce que le laser (22) est suivi d'un dispositif de déviation fonctionnant de manière mécanique et/ou optique lequel dirige le rayonnement vers la chambre (16) du cylindre qui, dans l'ordre d'allumage, se trouve en course d'aspiration.

30. Système d'injection de carburant selon la revendication 29, caractérisé en ce que le dispositif de déviation est un convertisseur acousto-optique (43).

31. Système d'injection de carburant selon la revendication 30, caractérisé en ce que le convertisseur acousto-optique (43) est monté en série dans deux plans.

32. Système d'injection de carburant selon la revendication 27, caractérisé en ce que le laser (22) est orienté au moyen d'un dispositif de pivotement vers le guide d'ondes lumineuses qui communique avec la chambre (16) associée au cylindre se trouvant en course d'aspiration.

33. Système d'injection de carburant selon la revendication 28, caractérisé en ce que la libération s'effectue au moyen de commutateurs opto-électriques (42) dont la mise sous tension provoque la libération d'un passage optique.

34. Système d'injection de carburant selon la revendication 27, caractérisé en ce que le laser (22) est constitué d'une rangée de diodes laser dont les diodes individuelles communiquent avec les chambres (16) au moyen de guides d'ondes lumineuses et que l'excitation se fait dans l'ordre d'allumage de telle façon que la chambre (16) associée au cylindre se trouvant en course d'aspiration reçoit le faisceau (23).

Fig 1

Fig 3

Fig 2

Fig.4

Figur 6

Fig 7

Figur 8

22

40

39

41

42

16

Figur 8a

22

43

43

43

43

16

15

**Figur 9**